# EUROPÄISCHE PATENTANMELDUNG

(11) **EP 1 970 186 A2**
(43) Veröffentlichungstag der Anmeldung: **17.09.2008**
(21) Anmeldenummer: 08004875.4
(22) Anmeldetag: 14.03.2008
(51) Int. Cl.: B29C 45/14

(54) **Verfahren zur Herstellung eines Verbundwerkstoffs sowie damit hergestelltes Verbundteil**

(30) Priorität: 15.03.2007 DE 102007013231
(71) Anmelder: Gloss, Mathias, 75233 Tiefenbronn-Mühlhausen (DE)
(72) Erfinder: Gloss, Mathias, 75233 Tiefenbronn-Mühlhausen (DE)
(74) Vertreter: Reinhardt, Harry

(57) **Zusammenfassung**

Ein Verfahren dient der Herstellung eines Verbundwerkstoffs aus einem mit einer Durchbrechung (13) versehenen flächigen Trägermaterial (10) und einem damit in Verbindung stehendem plastifizierbaren Material (11). Das Trägermaterial (10) wird in ein mehrere Formteile umfassendes Formwerkzeug eingelegt, das Formwerkzeugs zur Bildung eine Formhohlraums geschlossen und plastifiziertes Material in den Formhohlraum unter zumindest teilweisem Umspritzen des Trägermaterials (10) eingespritzt, wobei plastifizierbares Material in Fließrichtung durch die Durchbrechung (13) des Trägermaterials (10) gelangt und zumindest teilweise an beiden Seiten des Trägermaterials (10) angeformt wird. Dadurch, dass an der und/oder in der Durchbrechung (13) wenigstens eine Aussparung (15) hervorrufende Formteile und/oder Einlegeteile (14) aus dem plastifizierbaren Material angeordnet werden, an denen Durchtrittskanäle (16, 17) für den Durchtritt des plastifizierbaren Materials (11) zu bzw. an den Durchbrechungen (13) gebildet werden, wird ein Verfahren zur Herstellung eines Verbundteils in möglichst wenigen Arbeitsschritten bereitgestellt, das leicht befestigt werden kann. Gleiches gilt für das so hergestellte Verbundteil.

## Beschreibung

### Gebiet der Erfindung

Die Erfindung betrifft ein Verfahren zur Herstellung eines Verbundwerkstoffes aus wenigstens einem Trägermaterial und wenigstens einem damit in Verbindung stehenden plastifizierbaren Material nach dem Oberbegriff des Anspruches 1 sowie ein Verbundteil aus diesen Werkstoffen nach dem Oberbegriff des Anspruches 9.

### Stand der Technik

Derartige Verbundteile werden vielfach verwendet, wenn es einerseits auf die tragenden Eigenschaften eines Trägermaterials in Verbindung mit bestimmten Eigenschaften eines Kunststoffmaterials oder eines anderen plastifizierbaren Materials ankommt. So muss zum Beispiel das Kunststoffmaterial entsprechenden abrasiven oder korrosiven Belastungen Stand halten und dennoch elastisch verformbar sein, während das Trägermaterial die entsprechende Steifigkeit zur Befestigung oder zum Erhalt der Form liefern muss.

Derartige Verbundteile werden z.B. für Fußstützen in Fahrzeugen eingesetzt, d.h. zum Schutz der Position des linken Fußes, wenn dieser nicht für die Kupplung benötigt wird oder in einem Automatikfahrzeug abgestellt werden kann. Diese Fußstütze hat ferner die Aufgabe, dem Fahrer die Möglichkeit zu geben, seine Sitzposition in geeigneter Weise einzunehmen.

Bisher werden solche Fußstützen, sofern sie aus einem Verbundwerkstoff hergestellt werden, meist dadurch hergestellt, dass einerseits, eine metallische, mit Bohrungen versehene Platte verwendet wird, in der auch bereits die Befestigungselemente vorgesehen sind, die eine Befestigung dieses Metallteils z.B. durch Schraubverbindungen an der Karosserie des Fahrzeugs gestatten. Unter diesem metallischen Trägerteil werden Kunststoffplatten verwendet, die über entsprechende Noppen verfügen, die durch die Bohrungen des Metallteils hervorragen und so das Metallteil vor Kratzern schützen. Die Befestigung erfordert insofern mehrere Arbeitsschritte, zudem ist die Herstellung durch die verschiedenen Teile verhältnismäßig aufwendig.

### Aufgabe der Erfindung

Ausgehend vom diesem Stand der Technik liegt der vorliegenden Erfindung die Aufgabe zu Grunde, ein Verfahren zur Herstellung eines Verbundwerkstoffes in möglichst wenigen Arbeitsschritten bereit zu stellen, das leicht befestigt werden kann. Gleiches gilt für das so hergestellte Verbundteil.

Diese Aufgabe wird durch ein Verfahren mit den Merkmalen des Anspruches 1 sowie durch ein Verbundteil mit den Merkmalen des Anspruches 9 gelöst.

Verfahrensgemäß wird so vorgegangen, dass Anformungen aus dem plastifizierbaren Material auf beiden Seiten des Trägermaterials gebildet werden, während gleichzeitig aber auch der Raum geschaffen wird, der eine exakte Positionierung des Kunststoffes und bedarfsweise auch entsprechender Einlegeteile gestattet, die später bedarfsweise zur Fixierung des Verbundteils benötigt werden. Insofern müssen die Durchbrechungen so ausgebildet sein, dass trotz der eventuellen Befestigung von Einlegeteilen und trotz eine exakten Positionierung noch plastifiziertes Material problemlos in Fließrichtung über Durchtrittskanäle durch die Durchbrechungen gelangen kann.

Bei einer Ausgestaltung nach den Ansprüchen 2 bis 4 oder 15 wird zudem eine plastische Verformung des Trägermaterials bewusst vorgenommen, um dadurch beim Formschluss in einer Spritzgießmaschine ein Anspritzen von Material an der späteren Sichtseite des Trägermaterials zu erreichen, ohne dass es zu einem Überspritzen kommt, das optisch insbesondere an höherwertigen Teilen nicht akzeptabel ist. Dieses Überspritzen kommt dadurch zu Stande, dass üblicherweise Kunststoff noch in den Trennspalt zwischen Einlegeteil und Formwandung gelangen kann. Die plastische Verformung führt nun jedoch dazu, dass eine erhöhte Abdichtung in diesem Übergangsbereich eintritt.

Vorzugsweise befindet sich der plastisch verformte Bereich am Rande der Durchbrechung, was es wiederum erforderlich macht, dass zumindest von der Seite, die in Fließrichtung vor der Durchbrechung liegt, entsprechende Formteile angreifen können. Gleichzeitig ist jedoch sicher zu stellen, dass diese Formteile den Durchfluss des plastifizierbaren Materials nicht behindern.

Um eine bessere Fixierung des Verbundteils zu erreichen, besteht das Einlegeteil, das die spätere Fixierung bewirken soll, aus einem vorzugsweise ultraschall- oder infrarotschweißbarem Kunststoff gemäß den Ansprüchen 11 oder 20. Die Einlegeteile werden dazu gemäß den Ansprüchen 6 bis 8 bzw. 17 in den Durchbrechungen des Trägermaterials 10 gelagert werden und erlauben dennoch den Durchtritt des Materials. Ferner ist es erforderlich, dass im Endzustand die Einlegeteile so am Trägermaterial fixiert sind, dass das Verbundteil nicht abgezogen werden kann. Dies wird dadurch sichergestellt, dass die Einlegeteile einen ausreichenden Querschnitt zum Durchtritt des plastifizierbaren Materials freilassen, so dass ein Um- bzw. Hinterspritzen der Einlegeteile möglich ist.

Weitere Vorteile ergeben sich aus den Unteransprüchen und der folgenden Beschreibung.

### Kurzbeschreibung der Figuren

Im Folgenden wird die Erfindung anhand eines in den beigefügten Figuren dargestellten Ausführungsbeispiels näher erläutert. Es zeigen:
- Fig. 1: eine Ansicht der Sichtseite des Verbundteils,
- Fig. 2: einen Schnitt nach Line 2-2 von Fig. 1,
- Fig. 2a: eine Ansicht nach Fig. 2 mit zugehörigem Prägestempel,
- Fig. 3: einen Schnitt nach Linie 3-3 von Fig. 1,
- Fig. 4: einen Schnitt nach Linie 4-4 von Fig. 1,
- Fig. 5: eine Ansicht eines Ausschnitts des Verbundteils in Fließrichtung auf die Aussparungen,
- Fig. 6: eine Ansicht eines Ausschnitts des Verbundteils gegen die Fließrichtung auf Noppe und Durchbrechung.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

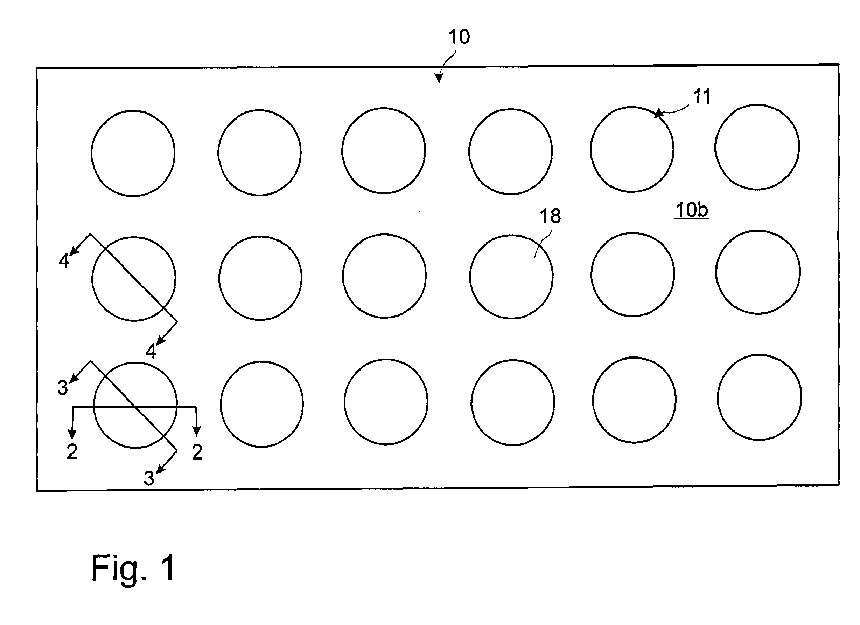

Die Figuren zeigen ein Verbundteil wie es zum Beispiel aus Verbundwerkstoffen aus einem Trägermaterial 10 und aus wenigstens einem damit in Verbindung stehendem plastifizierbaren Material 11 hergestellt werden kann. Die Herstellung derartiger Verbundwerkstoffe erfolgt üblicherweise durch die Spritzgießtechnik, bei der das Trägermaterial in die Spritzgießform eingelegt wird und anschließend mit dem plastifizierten Kunststoff, also mit dem plastifizierbaren Material 11 umspitzt wird. Unter einem Umspritzen wird im vorliegendem Fall das Anformen des plastifizierbaren Materials zumindest teilweise auf beiden Seiten des Trägermaterials verstanden, so dass sich in der Draufsicht zum Beispiel eine Ansicht wie in Figur 1 ergibt.

Ein entsprechend hergestelltes Element mit einer Sichtseite 10b wie in Fig. 1 kann für vielerlei Zwecke eingesetzt werden und kann auch eine andere Oberflächengestalt haben. Die in Figur 1 dargestellte Oberflächengestalt wird zum Beispiel für Fußstützen in Fahrzeugen eingesetzt, wobei das plastifizierbare Material 11 aus dem Trägermaterial nach oben vorsteht, und insofern die Auflagefläche für den Fuß des Benutzers bildet. Das plastifizierbare Material ist vorzugsweise ein Elastomer oder ein anderes geeignetes Material, das über entsprechende Abriebeigenschaften verfügt. Das Trägermaterial ist vorzugsweise metallisch und im konkreten Ausführungsbeispiel Edelstahl. Grundsätzlich kann jedoch auch ein beliebiges anderes Trägermaterial verwendet werden.

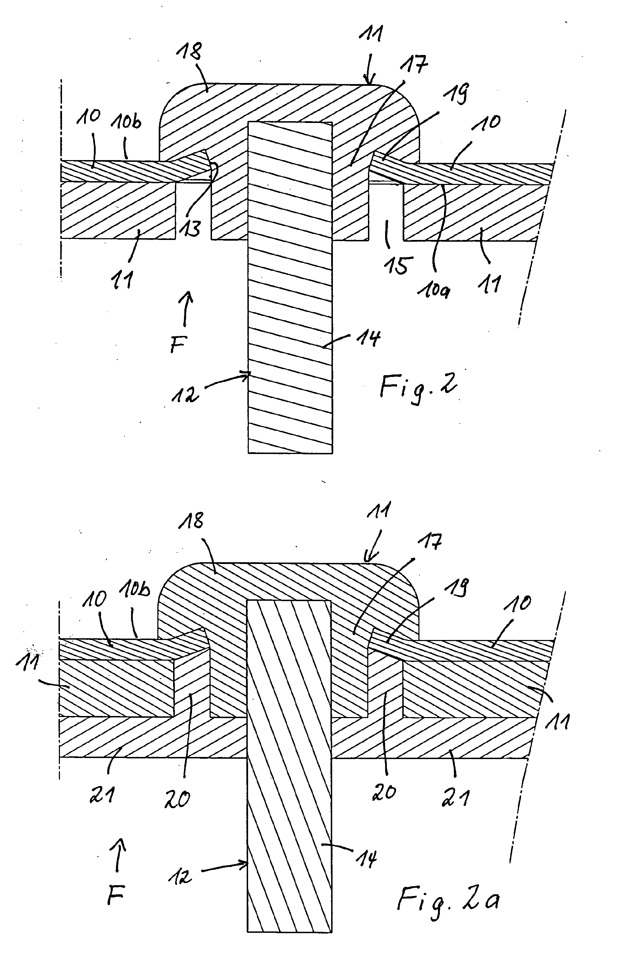

Die Figuren 2 bis 4 zeigen, dass das Trägermaterial wenigstens eine Durchbrechung 13, im Ausführungsbeispiel mehrere Durchbrechungen aufweist und zumindest teilweise von plastifizierbaren Material so durchdrungen ist, dass das plastifizierbare Material im Ausführungsbeispiel vollflächig von unten an der Seite 10a des Trägermaterials anliegt, während es von oben an der Seite 10b nur teilweise anliegt in dem sich dort Noppen 18 ausbilden. Beliebige andere Formen sind jedoch möglich.

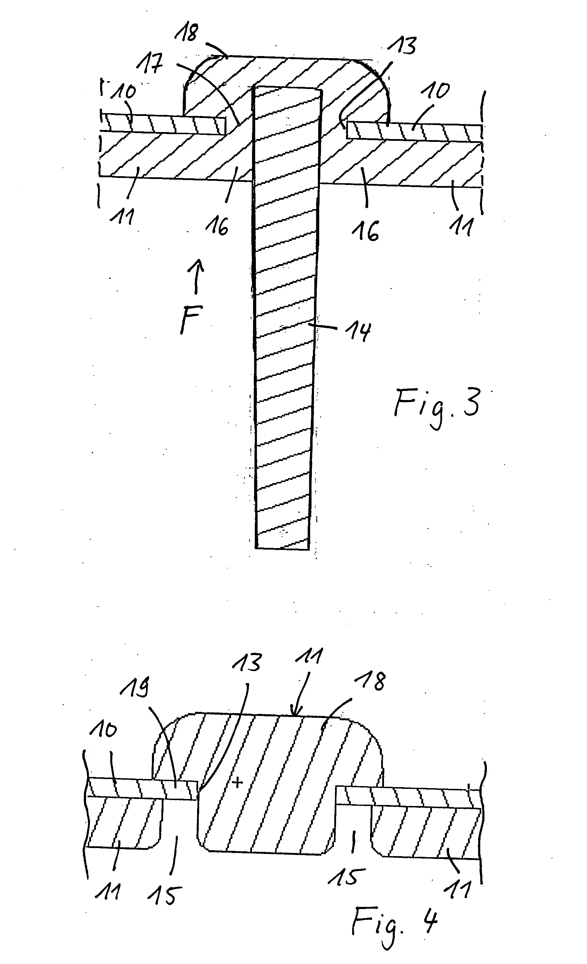

In Fig. 2 ist auch zu sehen, dass von der Unterseite zumindest Aussparungen 15 freigehalten sind. Diese Aussparungen 15 am fertigen Verbundteil reichen durch das plastifizierbare Material 11 bis zum Trägermaterial 10. Gebildet werden sie durch entsprechende, stiftförmige Anformungen, die ein Formteil 21 der Spritzgießform bzw. Teil des Formwerkzeuges oder Prägestempels 20 gemäß Fig. 2a sind. Figur 2 und 3 zeigen ferner Einlegeteile 14, die in den Durchbrechungen 13 angeordnet sind und vom plastifizierbaren Material 11 umgeben sind. Diese Einlegeteile 14 sollen später die Befestigung des Verbundteils im konkreten Ausführungsbeispiel an der Fahrzeugkarosserie erlauben. Die Einlegeteile 14 bestehen im Ausführungsbeispiel aus einem weiteren plastifizierbaren Material, wie zum Beispiel einem Polyamid, das zur Verbindung mit der Fahrzeugkarosserie vorzugsweise ultraschall- oder infrarotgeschweißt werden kann. Andere Materialien sind möglich und grundsätzlich kann das Einlegeteil auch aus einem nicht plastifizierbaren Material wie zum Beispiel Metall bestehen.

Die Aussparungen 15 sind am Rand der Durchbrechungen angeordnet und zwar so, dass sie in Fließrichtung F des plastifizierten Materials vor den Durchbrechungen 13 angeordnet sind. Wie in den Figuren 2 bis 3 angedeutet, kommt das plastifizierbare Material beim Einspritzvorgang - in den Figuren von unten - und gelangt über in Figur 3 ersichtliche Durchtrittskanäle 16,17 durch die Durchbrechungen 13, so dass das plastifizierbaren Material durch die Durchbrechungen und durch die Durchtrittskanäle 16,17 in den Formhohlraum hinter den Durchbrechungen gelangen kann, um dort die Noppen 18 zu bilden.

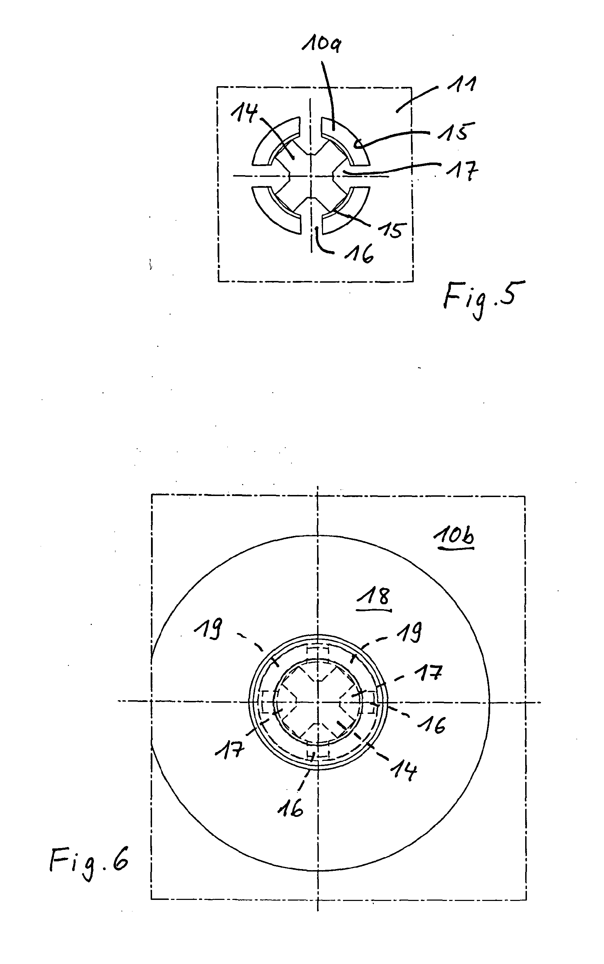

Die Aussparungen 15, die zum Beispiel auch in Figur 5, der späteren Unterseite des Verbundwerkstoffs zu sehen sind, werden durch die Formteile 21 (Fig. 2a) gebildet, die beim Schließen des Formwerkzeuges die Aufgabe haben, so am in die Spritzgießform eingelegten Trägermaterial anzuliegen, dass sich eine plastische Verformung des Trägermaterials 10 in diesem Bereich ergibt. Das Trägermaterial wird dabei in Fließrichtung F, in den Figuren 2 bis 4 nach oben verformt, wobei sich der in Fig. 6 angedeutete plastisch verformte Bereich 19 ergibt. Dieser plastisch verformte Bereich 19 führt dazu, dass sich ein abdichtender Übergang zwischen dem Formhohlraum, in dem die Noppen 18 gebildet werden, und dem Trägermaterial 10 ergibt bzw. eine Abdichtung zwischen Formwandung und Trägermaterial 10, so dass ein Überspritzen, das ansonsten im Trennspalt zwischen Formwandung und Trägermaterial entstehen kann, vermieden wird. Dies führt bei diesem Herstellungsprozess zu einer auch hohen Qualitätsanforderungen genügenden Optik der Sichtseite, also in den Figuren 2 bis 4 einer Ansicht von oben.

Allerdings muss sichergestellt werden, dass das plastifizierbare Material 11 an diesen die Aussparung 15 bildenden Formteilen vorbei in den hinter den Durchbrechungen 13 befindlichen Formhohlraum gelangen kann. Ein Vergleich zwischen den Figuren 2 und 3 in Verbindung mit Fig. 5 macht deutlich, dass insofern Durchtrittskanäle 16, 17 gebildet werden, die einen entsprechenden Durchtritt des Materials gestatten. Die Durchtrittskanäle in Figur 2 können aber auch horizontal verlaufen, indem zum Beispiel ein Ring als Formteil gebildet wird, der die Aussparung 15 hinterlässt und horizontal einen Durchtrittskanal aufweist. In diesem Fall würde sich dann in Figur 5 einen geschlossener Aussparungsring an Stelle der Aussparung 15 ergeben.

Wenn außerdem Einlegeteile 14 aus dem weiteren plastifizierbaren Material 12 in der wenigstens einen Durchbrechung 13 eingelegt werden, muss ebenfalls das plastifizierbare Material in den gegenüberliegenden Formhohlraum gelangen können. Dies wird insbesondere durch Figur 2 und 5 deutlich. Dort ist nämlich zu erkennen, dass das Einlegeteil im Ausführungsbeispiel kreuzförmig ist, wobei die Länge und Breite des Kreuzes dem Durchmesser der Durchbrechung 13 im wesentlichen entspricht, wie auch Fig. 2 verdeutlicht. Entlang des Kreuzes sind Durchtrittkanäle 17 gebildet, die den Durchtritt des plastifizierbaren Materials auf die gegenüberliegende Seite der Durchbrechung 13 ermöglichen. Dadurch ist es möglich, das Einlegeteil 14 wie in Fig. 2 ersichtlich auf der Rückseite 10b des Trägermaterials 10 so zu ankern, dass im befestigten Zustand das Verbundteil nicht ohne weiteres abgezogen werden kann. Gleichzeitig wird der Werkstoff, aus dem das Einlegeteil 14 gebildet ist, von dem plastifizierbaren Material der Noppen 18 überspritzt.

### Das Verfahren zur Herstellung des Verbundteils gestaltet sich wie folgt:

Zunächst wird das Trägermaterial 10 in ein aus mehreren Formteilen bestehendes Formwerkzeug eingelegt, das Trägermaterial 10 weist zu diesem Zeitpunkt bereits die wenigstens eine Durchbrechung 13 auf. Das Trägermaterial ist flächig und besitzt damit zwei Seiten 10a, 10b, von denen die Seite 10b in Fließrichtung F des eingespritzten, plastifizierbaren Materials 11 hinter der Durchbrechung 13 liegt. Befindet sich das Trägermaterial 10 im Formwerkzeug, wird dieses geschlossen und das plastifizierbare Material 11 plastifiziert und in den Formhohlraum des Formwerkzeugs eingespritzt. Dabei wird das Trägermaterial zumindest teilweise umspritzt bzw. das Material an das Trägermaterial 10 angespritzt. Das plastifizierbaren Material gelangt dabei durch die Durchbrechung 13 des Trägermaterials, aber zumindest auch auf die Seite 10b, die in Fließrichtung F des eingespritzten Materials hinter der Durchbrechung 13 liegt.

Bei Formschluss sind an den Durchbrechungen und/oder in den Durchbrechungen Formteile angeordnet, die die wenigstens eine Aussparung 15 am fertigen Teil bilden. Ebenso sind alternativ oder gegebenenfalls ergänzend Einlegeteile 14 an oder in den Durchbrechungen 13 angeordnet, die so angeordnet werden, dass sich Durchtrittskanäle 16,17 für den Durchtritt des plastifizierbaren Material 11 zu bzw. an den Durchbrechungen 13 bilden. Beim Formschluss wirken die die Aussparung 15 bildenden Formteile auf das Trägermaterial 10 und im Ausführungsbeispiel auf den Rand der Durchbrechungen 13 im Trägermaterial 10 ein. Dieses Trägermaterial ist wie z.B. aus Fig. 2 ersichtlich in Fließrichtung F an der Formwandung am Rand der Noppen 18 gelagert, so dass die die Aussparung 15 hervorrufenden Formteile auf die auskragenden Teile des Trägermaterials einwirken und dieses auf Grund der entsprechenden Dimensionierung in Fließrichtung F plastisch verformen können. Der plastisch verformte Bereich 19 begrenzt auf Grund dieser plastischen Verformung den Formhohlraum auf der in Fließrichtung F hinter der Durchbrechung 13 liegenden Seite 10b abdichtend, so dass ein Überspritzen auf dieser Seite zuverlässig vermieden wird. Gleichzeitig werden zwischen den die Aussparung bildenden Formteilen die Durchtrittskanäle 16 gebildet, so dass das plastifizierbare Material beim Einspritzen zu den und durch die Durchbrechungen 13 gelangen kann.

Gegebenenfalls können vor dem Schließen der Form oder gegebenenfalls auch in einem weiteren vorgeschalteten Spritzgießvorgang die Einlegeteile gefertigt oder an ihrer späteren Stelle durch Spritzgießen geformt werden, wie dies beim Mehrkomponentenspritzgießen dem Fachmann bekannt ist. Die Einlegeteile 14 die vorzugsweise aus einem weiteren plastifizierbaren Material wie zum Beispiel einem Polyamid hergestellt sind, werden dabei so angeordnet, dass sie die Durchbrechungen 13 durchdringen, wobei der verbleibende Querschnitt der Durchbrechungen die Durchtrittskanäle 17 bildet. Die Einlegeteile 14 werden gleichzeitig so eingelegt, dass sie auf der in Fließrichtung hinter den Durchbrechungen liegenden Seite 10b des Trägermaterials entweder durch ihre eigene Verformung und/oder durch das plastifizierbare Material 11 verankert werden, so dass eine feste Verbindung zwischen Einlegeteil und Trägermaterial 10 entsteht.

### Bezugszeichenliste

- 10: Trägermaterial
- 10a,10b: Seite
- 11: plastifizierbaren Material
- 12: weiteres plastifizierbaren Material
- 13: Durchbrechung
- 14: Einlegeteil
- 15: Aussparung
- 16,17: Durchtrittskanäle
- 18: Noppen
- 19: verformter Bereich
- 20: Prägestempel
- 21: Formteil
- F: Fleißrichtung

## Patentansprüche

1. Verfahren zur Herstellung eines Verbundwerkstoffs aus wenigstens einem mit wenigstens einer Durchbrechung (13) versehenen, flächigen Trägermaterial (10) und wenigstens einem damit in Verbindung stehendem plastifizierbaren Material (11), mit den Schritten:
- Einlegen des Trägermaterials (10) in ein mehrere Formteile umfassendes Formwerkzeug,
- Schließen des Formwerkzeugs zur Bildung eines Formhohlraums,
- Plastifizieren des plastifizierbaren Materials (11) und Einspritzen des plastifizierbaren Materials in den Formhohlraum unter zumindest teilweisem Umspritzen des Trägermaterials (10), wobei plastifizierbares Material in Fließrichtung durch die Durchbrechung (13) des Trägermaterials (10) gelangt und zumindest teilweise an beiden Seiten des Trägermaterials (10) angeformt wird,
**dadurch gekennzeichnet, dass** an der und/oder in der wenigstens einen Durchbrechung (13) wenigstens ein wenigstens eine Aussparung (15) hervorrufendes Formteil (21) und/oder Einlegeteile (14) aus dem plastifizierbaren Material angeordnet werden, an denen Durchtrittskanäle (16, 17) für den Durchtritt des plastifizierbaren Materials (11) zu bzw. an den Durchbrechungen (13) gebildet werden.

2. Verfahren nach Anspruch 1, **dadurch gekennzeichnet, dass** das eingelegte Trägermaterial (10) beim Schließen des Formwerkzeugs zwischen den Formteilen vorzugsweise am Rand der Durchbrechungen (13) plastisch verformt wird.

3. Verfahren nach Anspruch 1 oder 2, **dadurch gekennzeichnet, dass** die plastische Verformung des Trägermaterials (10) in Fließrichtung (F) des plastifizierten Materials (11) beim Einspritzen durch die Durchbrechung (13) aus der Fläche des Trägermaterials erfolgt.

4. Verfahren nach Anspruch 2 oder 3, **dadurch gekennzeichnet, dass** der plastisch verformte Bereich (19) den Formhohlraum auf der in Fließrichtung hinter der Durchbrechung (13) liegenden Seite (10b) des Trägermaterial (10) abdichtend begrenzt und/oder durch am Rand der Durchbrechung (13) angeordnete, das die Aussparung hervorrufende Formteil (21) bildende, stiftförmige Anformungen verursacht wird, zwischen denen die Durchtrittskanäle (16) gebildet werden.

5. Verfahren nach einem der vorhergehenden Ansprüche, **dadurch gekennzeichnet, dass** die Einlegeteile (14) aus einem weiteren plastifizierbaren Material (12) hergestellt werden und/oder ein weiteres plastifizierbares Material (12) verwendet wird, das vorzugsweise ultraschall- oder infrarotschweißfähig ist.

6. Verfahren nach einem der vorhergehenden Ansprüche, **dadurch gekennzeichnet, dass** die Einlegeteile (14) die Durchbrechungen (13) durchdringen, wobei nach Einbringen der Einlegeteile der verbleibende Querschnitt der Durchbrechungen (13) die Durchtrittskanäle (17) ausbildet.

7. Verfahren nach einem der vorgehenden Ansprüche, **dadurch gekennzeichnet, dass** die Einlegeteile (14) auf der in Fließrichtung des plastifizierbaren Materials hinter den Durchbrechungen (13) liegenden Seite (10b) des Trägermaterials durch ihre eigene plastische Verformung und/oder durch das plastifizierbare Material (11) verankert werden.

8. Verfahren nach einem der vorgehenden Ansprüche, **dadurch gekennzeichnet, dass** das Trägermaterial (10) metallisch und insbesondere Edelstahl ist und/oder dass das plastifizierbare Material (11) ein Elastomer ist.

9. Verbundteil, aus wenigstens einem mit wenigstens einer Durchbrechung (13) versehenen, flächigen Trägermaterial (10) und aus wenigstens einem damit in Verbindung stehenden, plastifizierbaren, durch Spritzgießen mit dem Trägermaterial (10) verbindbaren Material (11), das die Durchbrechung (13) durchdringt, und zumindest teilweise auf beiden Seiten (10a, 10b) des Trägermaterials (10) angeformt ist,
**dadurch gekennzeichnet, dass** die Durchbrechung (13) von wenigstens einer durch das plastifizierbare Material (11) bis zum Trägermaterial (10) reichenden Aussparung (15) umgeben ist und/oder die Einlegeteile (14) in den Durchbrechungen (13) von dem plastifizierbaren Material (11) umgeben sind.

10. Verbundteil nach Anspruch 9, **dadurch gekennzeichnet, dass** die Aussparung (15) am Rand der Durchbrechung (13) und/oder in Fließrichtung (F) des plastifizierbaren Materials (11) vor der Durchbrechung (13) angeordnet ist.

11. Verbundteil nach Anspruch 9 oder 10, **dadurch gekennzeichnet, dass** das Trägermaterial (10) am Rand der Durchbrechung (13) einen plastisch verformten Bereich (19) aufweist.

12. Verbundteil nach Anspruch 11, **dadurch gekennzeichnet, dass** der plastisch verformte Bereich (19) die vorzugsweise durch Noppen (18) gebildete Anformung des plastifizierbaren Materials auf der in Fließrichtung hinter der Durchbrechung (13) liegenden Seite (10b) des Trägermaterials (10) begrenzt.

13. Verbundteil nach einem der Ansprüche 9 bis 12, **dadurch gekennzeichnet, dass** die Einlegeteile (14) aus einem weiteren plastifizierbaren Material (12) bestehen und/oder dass das Trägermaterial metallisch ist und insbesondere aus Edelstahl besteht.

14. Verbundteil nach einem der Ansprüche 9 bis 13, **dadurch gekennzeichnet, dass** das plastifizierbare Material ein Elastomer ist und/oder dass das weitere plastifizierbare Material (12) des Einlegeteils (14) ein Material ist, das zur Befestigung des Verbundteiles vorzugsweise ultraschall- oder infrarotschweißbar ist.
